Europäisches Patentamt

European Patent Office

Office européen des brevets

(11) Publication number: **0 583 475 A1**

# EUROPEAN PATENT APPLICATION
## published in accordance with Art. 158(3) EPC

㉑ Application number: **92923990.3**

㉒ Date of filing: **20.11.92**

㊇ International application number:
**PCT/JP92/01519**

㊆ International publication number:
**WO 93/11450 (10.06.93 93/14)**

(51) Int. Cl.⁵: **G01T 1/20**

㉚ Priority: **06.12.91 JP 360853/91**
**06.02.92 JP 66586/92**

㊸ Date of publication of application:
**23.02.94 Bulletin 94/08**

㊙ Designated Contracting States:
**CH DE FR GB LI SE**

�柒 Applicant: **SII TECHNORESEARCH, INC.**
**1501 Kubota,**
**Yoshimi-cho**
**Hiki-gun, Saitama 355-01(JP)**
Applicant: **NISHIMAKI, Toshiyuki**
**Room &NUM;101,**
**Suwa 2-chome**
**Tama-shi, Tokyo 206(JP)**

㉒ Inventor: **NISHIMAKI, Toshiyuki**
**Room 101**
**4-5, Suwa 2-chome**
**Tama-shi Tokyo 206(JP)**

㊍ Representative: **Melzer, Wolfgang, Dipl.-Ing. et al**
**Patentanwälte Mitscherlich & Partner,**
**Sonnenstrasse 33,**
**Postfach 33 06 09**
**D-80066 München (DE)**

(54) COMPOSITION FOR SOLID SCINTILLATION, PRODUCTION AND APPLICATION THEREOF, AND MEASUREMENT METHOD USING THE SAME.

㊗ A composition for solid scintillation prepared using an emulsified scintillator (A) for a liquid scintillator and a solidifying agent. The composition is formed into a solid scintillator holder or a solid scintillation filter paper, and thus radioactivity from a radioactive nuclide can be measured without using the liquid scintillator. The solid scintillator or the like is utilized again so as to extremely reduce the amount of radioactive wastes and to facilitate processing of the radioactive wastes. The solid scintillation composition is formulated into a scintillation sensitizer or to a scintillation sensitizer emulsifier, and a time for experiments is drastically reduced by extremely short exposure to radioactivity from the radioactive nuclide by radioautography.

Rank Xerox (UK) Business Services
(3.10/3.09/3.3.4)

FIG. 1

TECHNICAL FIELD

The present invention relates to a solid scintillator composition, a process for the preparation thereof, a use thereof, and a method for the measurement utilizing same.

Experiments requiring the use of low-level radioactive substances are the essential means in research in the field of biochemistry including genetic engineering and biotechnology, pharmacology, medicine and so on. As the experiments must utilize the radioactive substances although their radioactive levels are low, however, there is the risk that the radioactive substances cause pollution and the pollution may be diffused. In order to prevent such a serious situation, the safe waste disposal of the radioactive substances is the extremely significant problem from the viewpoint of environmental issues and a strong demand has been desired to develop a method for the measurement, which does not diffuse or little diffuses the radioactive substances.

BACKGROUND ART

Heretofore, when the radiation dose of a low-level radioactive substance such as phosphorus 32 ($^{32}$P), thorium ($^{3}$H), carbon 14 ($^{14}$C), or the like is to be measured accurately, a liquid scintillation counter has usually been employed. When the low-level radioactive substances are to be measured with the liquid scintillation counter, there is prepared a so-called scintillation cocktail having a fluorescent agent such as DPO, POPO or the like and an emulsifying agent such as Triton® X100 or the like added to an organic solvent such as toluene, dioxane or the like, a sample containing a radioactive substance to be measured is dissolved in the scintillation cocktail and diffused therein, and the radiation dose of the radioactive substance is then measured with the liquid scintillation counter. This method for the measurement, however, requires the sample of a very small amount ranging from several tens microliters to several hundreds microliters to be added to a large amount (from approximately from 5 to 10 ml) of the scintillation cocktail. Hence, as a result, a large amount of the radioactive substances should be treated for disposal, and the safe disposal of the radioactive waste presents the great problem even from the point of view of environmental pollution.

Further, for those who carry out experiments that use liquid scintillators, an extremely difficult problem to be solved after the experiments using the liquid scintillation counter has been finished is the disposal of the liquid scintillator polluted with the radioactive substances contained in the sample. For example, when the radiation dose of a radioactive substance is measured with a liquid scintillation counter utilizing a glass vial, the employed liquid scintillators are collected at one location, the liquid portion of the liquid scintillators is evaporated to reduce their total volume to several tenths, and the condensed amount of the liquid scintillators is disposed as radioactive waste. It should be noted herein, however, that even if a large amount of the liquid scintillators has been evaporated, a considerably large amount of the uncondensed liquid scintillators is left yet as radioactive waste so that the radioactive waste should be subjected to waste disposal. On the other hand, the glass vials can be re-employed by washing them well; however, persons washing the glass vials may often be polluted with a minute amount of radiation during washing operation. Hence, a strong demand has been made to develop a safe method of the measurement of the radiation of the radioactive substance in order to ensure the safety of persons carrying out experiments.

Further, as measures to protect persons carrying out experiments in a safe fashion from the pollution with the radiation of the radioactive substances, there has been adopted a procedure that involves forming a glass vial as a plastic container, mounting an inner bag in the inside of the plastic container, pouring a liquid scintillator having a sample containing a radioactive substance dissolved therein as an object of measurement into the inner bag, and measuring the sample in the liquid scintillator with the liquid scintillation counter. With this procedure, the plastic container is not polluted with the radioactive substance to be measured, it can be re-employed without washing; however, this procedure causes the inner bag to be polluted with the radioactive substance contained in the sample as well as the liquid scintillator polluted with the radioactive substance, so that the inner bag should also be disposed of as radioactive waste. Further, this procedure does not offer any improvement in the waste disposal of the liquid scintillator as compared with conventional procedures and, like the conventional procedures, a large amount of the liquid scintillators should still be disposed of as radioactive waste.

Furthermore, recently, there is commercially available a plastic container for measuring radioactive substances, called Ready Cap (Beckman) that contains a solid scintillator in the powdery form therein. This product has been developed with the object to re-employ a sample, and it can be said superior in terms of the re-employment of the sample. The plastic container called Ready cap itself, however, cannot avoid the pollution from the radioactive substances contained in the sample; thus, the container 'Ready cap' cannot be re-employed and it should be disposed of as inflammable and radioactive solid waste. In addition, there is a report that this product is subject heavily to influence from color quenching (red and blue pigments) (SHIBA Kazuhiro, et al.: Radioisotopes, vol. 38, pp. 263-266 (1989); KATO Takahisa, et al.: Radioisotopes, vol. 38, pp. 259-262 (1989)).

As one of methods for the measurement of a radiation dose of radioactive substances, which allows re-employment of samples, there is known Cherenkov counting method that is utilized as a simplified method capable of measuring low-level radio-active substances. This method, however, presents the problem in measuring the concentration of low-level radiation because its counting efficiency is very low. In addition, it is reported that this method is subject to influence from color quenching to a considerable extent (KANEKO Takao, et al.: Radioisotopes, vol. 28, pp. 28-30 (1979); TAKIGAMI Makoto, et al.: Radioisotopes, vol. 38, pp. 263-266 (1978)). Furthermore, this method suffers from the defect that particularly $^3$H cannot be counted at al.

In addition to the matters as described hereinabove, it is of significance in terms of ensuring safety of persons carrying out experiments and so on that the degree of pollution on a surface of a table or a floor with a low-level radioactive substance, such as $^3$H, $^{14}$C, $^{125}$I, or the like, which has frequently been employed as a labelling substance. Heretofore, the degree of surface pollution has been determined by wiping the surface of a table, floor, or the like, with a smear filtering paper, immersing the resultant filtering paper in a large amount (approximately from 5 ml to 10 ml) contained in a measuring container, placing the container as a sample into a liquid scintillation counter, and measuring the amount of radiation of the sample. Hence, this procedure has changed nothing about the occurrence of the problem with radioactive waste disposal as described hereinabove even in measuring the degree of surface pollution. In addition, when the polluted surface of something is wiped with the smear filtering paper, there may arise even the risk that a certain amount of radioactive nuclides may be torn from the surface of the filtering paper after they have once been collected or adsorbed with the filtering paper, thereby rather diffusing an area of pollution of the radioactive nuclides. Further, a report is made to the effect that the tearing of the radioactive nuclides from the surface of the filtering paper or other actions reduces efficiency of wiping the radioactive nuclides, thereby suppressing a sufficient extent of the effect upon the wiping performance of the radioactive substances from being achieved (SHIMIZU Takehiko et al.; HOKEN BUTSURI, vol. 20, pp. 139-143 (1985); KOIZUMI Akira et al.: Radioisotopes, vol. 24, pp. 55-57 (1975)).

On top of that, the present invention can be applied to autoradiography that has extensively been utilized for observing a location of radiation in the field of medicine and biology. One of the greatest drawbacks upon the use of autoradiography, however, resides in the fact that an extremely long time is required for exposure of a sample containing a radioactive substance. Generally, a soft $\beta$-ray nuclide, such as $^3$H, $^{14}$C, $^{35}$S, $^{45}$Ca, or the like, which are utilized extensively in the field of medicine and biology, requires exposure of several weeks at the shortest and from 1 month to 2 months at the longest. The exposure for such a long duration may frequently cause a physically or chemically overlapping phenomenon as a matter of fact, thereby presenting the problem that accuracy of measurement becomes lower.

Recently, there has become commercially available a so-called fluorography sensitizer containing a fluorescent sensitizer that can absorb $\beta$-rays of a radioisotope and converting the $\beta$-rays into ultraviolet light or blue light. The fluorescent sensitizer, however, is expensive and it requires the use of a liquid scintillator when the amount of radiation of a sample is measured with a liquid scintillation counter. Hence, the problem with the disposal of radioactive waste liquor remains still unsolved after the completion of the measurement using the liquid scintillator.

Further, it is known that, in addition to macroautobiography, microautobiography is a method very effective for detecting the status of distribution of radiation within a tissue, which utilizes the photographing action of radioactive rays. The microautobiography is so adapted as to observe the degree of density, or blackening, by exposing radiation to a sensitive emulsifier containing a silver halide to thereby produce a latent image, developing the image, and fixing it. In order for the microautobiography to be utilized for detecting radiation and performing the photographing action, it usually requires a period of time as long as from several weeks to several months for detecting the soft $\beta$-ray nuclides as described hereinabove, although the periods of time may vary with the quantity and the kind of the nuclides.

Under the situation as described hereinabove, extensive studies have been made by the present inventor with the basic ideas that a re-use of radioactive substances and measuring containers is a requisite and vital factor for measuring radioactive rays at a non-closed experimental laboratory manipulating radioactive rays and that the re-use of the radioactive substances and the measuring containers can eventually lead to a reduction in the quantity of radioactive waste. As a result of such extensive studies on the methods of the measurement of a low-level radioactive substance, which allow the re-employment of the radioactive substances and the measuring containers, it has been found by the present inventor that the drawbacks prevailing in the conventional technology as described hereinabove can be solved by utilizing a solid scintillator obtained by solidifying an emulsified scintillator that has been utilized as a liquid scintillator. The present invention has been completed on the basis of this finding.

Further, the present inventor has developed the basic technology as described hereinabove and has found the applicability of the basic technology to the measurement for the degree of surface pollution with radioactive substances and to auto radiography, thereby completing a further mode of the present invention.

Therefore, the primary object of the present invention is to provide a solid scintillator composition characterized by using a solid scintillator obtained by solidifying an emulsified scintillator utilized as a liquid scintillator with an agent for solidifying it into the solid scintillator.

Another object of the present invention is to provide a process for the preparation of the solid scintillator composition.

A further object of the present invention is to provide use of the resulting solid scintillator composition for scintillation measurement or autography.

A still further object of the present invention is to provide a method for the measurement of a radioactive substance utilizing the resulting solid scintillator composition.

Other objects, features and advantages of the present invention will become apparent in the course of the description of the preferred embodiments, which follows, with reference to the accompanying drawings.

DISCLOSURE OF INVENTION

The solid scintillator composition according to the present invention comprises an emulsified scintillator (A) capable of being used also as a liquid scintillator and a solidifying agent (B) for solidifying the emulsified scintillator.

The term "emulsified scintillator" to be referred to in this description is intended to mean a scintillator which can be used for a liquid scintillation measurement method and which may comprise, for example, a solvent capable of being used for the liquid scintillator, a fluorescent agent, and an emulsifier.

The term "solidifying agent" to be referred to in this description is intended to mean any substance which is capable of solidifying the emulsified scintillator and which may include, for example, a plastic material or a gelatin material.

In addition, the term "sensitizer for scintillation measurement" to be referred to in this description is intended to mean any substance which is added to a sample to be measured and which has the property of increasing sensitivity of the sample to autoradiography.

Further, the term "scintillation-sensitive emulsion" to be referred to in this description is intended to mean any substance having the property of increasing sensitivity of a photosensitive material to be employed for autoradiography of the sample to be measured.

The solvent for the emulsified scintillator (A) to be used for the solid scintillator composition according to the present invention may include, for example, an aromatic hydrocarbon such as benzene; an alkylated benzene compound, e.g. toluene, xylene, or the like; an alkoxy benzene compound, e.g. methoxybenzene (anisole), or the like; a cyclic hydrocarbon such as a cycloalkane, e.g. phenylcyclohexane, or the like. Further, an etherified compound such as dioxane or the like can be used; however, in this case, it is preferred to use it together with a naphthalene in order to improve efficiency of energy transfer.

As the fluorescent agent to be used for the emulsified scintillator (A), there may be used any compound that can also be used as a solute for such conventional liquid scintillators. As specific examples of the fluorescent agents, there may be mentioned, for example, an oligo-phenylene type compound such as p-terphenyl, p-quarterphenyl, BIBUQ, or the like; an oxazole-type compound such as 2,5-diphenyl-oxazol (DPO), 1,4-bis-2-(5-phenyl-oxazolyl)benzene (POPOP), 1,4-bis-2-(4-methyl-5-phenyl-oxazolyl)benzene (DMPOPOP), or the like; an oxadiazole-type compound such as 2-phenyl-5-(4-biphenyl)-1,3,4-oxadiazole (PBD), 2-(4-tertiary butyl-phenyl)-5-(4-biphenyl)-5-(4-biphenyl)-1,3,4-oxadiazole (butyl-PBD), or the like; an other heterocyclic compound such as BBOT having a benzoxazole group joined to each of both sides of a thiophene group, or the like; or a linear polycyclic compound such as p-bis(o-methyl-styryl)benzene (bis-MSB), or the like.

As the emulsifiers to be employed for the emulsified scintillators (A), there may be frequently used a non-ionic surface-active agent which may include, for example, one of a polyethylene glycol ether type, of a polyethylene glycol ester type, of an ethylene oxide type, of a polyoxyethylene ether type, of a polyoxyethylene type, of a polyoxyethylene alkane amide type, of an aliphatic acid-polyvalent alcohol ester type, or the like. Specific examples of such non-ionic surface-active agents may include, for example, Triton® X-100 (Rohm & Haas), Triton® N-101 (Rohm & Haas), Sterox® NJ (Monsanto), Nonion® NS-210 (Nissan Chemical Industries), Liponox® NCJ (Lion), and so on. The non-ionic surface-active agents of the Triton® type may be employed frequently.

Each of the solvents, the fluorescent agents and the emulsifiers, each to be employed for the emulsified scintillators (A), may be used singly or in combination of two or more. Further, the rates of the solvent, the fluorescent agent and the emulsifiers are not limited to particular ones as long as they are those determined for conventional liquid scintillators. As standard scintillators, there may be mentioned, for example, a solution in which 4-6 grams of DPO and 0.1-0.2 gram of POPOP or 0.2-0.5 gram of dimethyl-POPOP are diluted with 1 liter of toluene or xylene, a solution in which 4-6 grams of DPO and 0.3-1.0 gram of bis-MSB are diluted with 1 liter of toluene or xylene, and so on. Further, as the emulsified scintillators, there may be mentioned, for example, a solution in which 7 grams of DPO and 1.5 grams of bis-MSB are diluted with 1 liter of a mixture of 65%-70% of toluene or para-xylene with 35%-30% of the non-ionic surface-active agent as described hereinabove, and so on.

On the other hand, the kind of the solidifying agents (B) for solidifying the emulsified scintillators to be employed for the preparation of the solid scintillator compositions according to the present invention is not limited to the particular one and there may be employed any solidifying agent as long as it can solidify the emulsified scintillators and it does not adversely affect the measurement, for example, by absorbing radiation from the radioactive nuclide to be measured or by other actions. As the solidifying agents (B) for solidifying the emulsified scintillators, there may be mentioned, for example, a plastic material and a gelatin material. As specific examples of the plastic materials, there may be mentioned, for example, an epoxy resin, an alkyd resin, an acryl resin, a polycarbonate resin, and so on. As the preferred examples of the plastic materials, there may be mentioned, for example, Epikote® and so on. It can be noted herein that, when a secondary-type epoxy resin is employed, a curing agent may be employed usually for curing the epoxy resin and that the curing agent may include, for example, a polyamine such as tetraethylene pentamine, etc, a polyamide, and so on.

In addition, as the sensitizers for scintillation measurement for autoradiography, there may be used, for example, a solid scintillator composition comprising the emulsified scintillator and the gelatin material, and each of the sensitizers may be employed by adding it to the sample to be measured. The amount of radiation radiated from the sample to be measured, to which the sensitizer is added, is measured by exposing a sensitive film such as an X-ray film or the like, which is conventionally employed for autoradiography, to radiation to be radiated from the sample.

On the other hand, for the scintillation-sensitive emulsions, a photographic emulsion or a photosensitizer may be added, for example, to the solid scintillator composition comprising the emulsified scintillator and the gelatin material. The scintillation-sensitive emulsion may be coated as a coating on a supporting material in the film shape and employed for the measurement of radiation radiated from the radioactive nuclide contained in the sample to be measured by autoradiography. As the photosensitizer, there may mainly be employed a silver halide or the like. Further, the photographic emulsion is not limited to a particular one as long as it does not adversely affect the measurement of radiation, for example, by absorbing the radiation or by other defective actions, and a commercially available photographic emulsion may be employed, which may include, for example, NR-M2 (Konica) and so on.

Further, as the gelatin materials to be employed for the solidifying agents for solidifying the emulsified scintillators, there may be mentioned, for example, agar, pectin, casein and so on. Among the gelatin materials, agar is preferred. The such gelatin materials are particularly useful when the solid scintillator composition is utilized for autoradiography. It should be noted herein, however, that the gelatin material may be employed as needed when the solid scintillator composition is used as the sensitizer for scintillation measurement.

The emulsified scintillator (A) may be admixed with the solidifying agent for solidifying the emulsified scintillator (B) in the solid scintillator composition according to the present invention at such a rate that, when the secondary-type epoxy resin to be employed as the solidifying agent for solidifying the emulsified scintillator (B) is cured with the curing agent, the rate of the secondary-type epoxy resin may be in the range usually of from 10% to 50% with respect to 100% of the emulsified scintillator (A), preferably from 20% to 40%, and the rate of the curing agent may be in the range usually of from 1% to 10%, preferably from 2% to 5%, with respect thereto.

On the other hand, when the gelatin material is employed as the solidifying agent for solidifying the emulsified scintillator (B), the gelatin material may be employed to such an extent sufficiently enough to solidify the emulsified scintillator, and the quantity of the gelatin material may vary with the kind of the emulsified scintillator, ranging usually from 0.1% to 20%, preferably from 0.5% to 10%.

The solid scintillator composition according to the present invention may be prepared by admixing the emulsified scintillator (A) with the solidifying agent for solidifying the emulsified scintillator (B) and solidifying the resulting mixture. More specifically, the solid scintillator composition may be prepared by

EP 0 583 475 A1

first preparing the emulsified scintillator (A) by mixing predetermined amounts of the solvent, the fluorescent agent and the emulsifier, adding the solidifying agent for solidifying the emulsified scintillator (B) to the resulting emulsified scintillator (A), and then subjecting the mixture to solidification, or alternatively by adding the resulting emulsified scintillator (A) to the solidifying agent for solidifying the emulsified scintillator (B), and then subjecting the mixture to solidification. The temperature at which the solid scintillator composition is prepared is not restricted to the particular one and it may be ambient temperature or elevated temperature.

The solid scintillator compositions prepared in the manner as described hereinabove can be processed so as to adapt to scintillation measurement, autoradiography and any other suitable use. More specifically, when it is employed for the scintillation measurement, the resulting solid scintillator composition may be processed into a solid scintillator holder or as a solid scintillation filtering paper. On the other hand, when it is employed for the autoradiography, the resulting solid scintillator composition may also be employed, for example, as a sensitizer for the scintillation measurement or a scintillation-sensitive emulsion.

In processing the solid scintillator composition according to the present invention into the solid scintillator holder to be employed for the scintillation measurement, there may be applied those conventional methods as being applied to molding a plastic material into processed products such as measuring holders, e.g. cells for placing the sample to be measured therein, and so on. More specifically, the processed products such as the solid scintillator holders and so on can be formed by shaping the solid scintillator composition into a predetermined form in conventional manner prior to the solidification of the solid scintillator composition or by shaping the solidified solid scintillator composition in conventional manner into a predetermined form after the solid scintillator composition has been solidified.

The processed products such as the solid scintillator holders for placing the samples therein may be arranged as the form separate from a measuring vial of the liquid scintillation counter. Hence, the measuring vial is not polluted with the radioactive substance contained in the sample so that the vial can be re-employed after measurement. On the other hand, although the processed products such as the holders and so on are polluted with the radioactive substance contained in the measured sample, they can be re-employed by washing them so as to remove the radioactive substance attached to the surface of the processed products. Further, as the scintillator is employed in the solid form in accordance with the present invention, the sample is not required to be diluted with the liquid scintillator unlike the liquid scintillation measurement, thereby failing to require the disposal of the scintillator as radioactive waste liquor polluted with the radioactive substances and at the same time reducing the quantity of radioactive waste disposal to a remarkably small extent. Hence, the present invention can dramatically save work required for the disposal of radioactive waste and it is extremely useful even in terms of the problem with the environment.

Further, the products such as the solid scintillator holders and so on, which are prepared by processing the solid scintillator compositions according to the present invention in the manner as described hereinabove, are less subject to influence from color quenching (red pigment and blue pigment) so that the present invention is very useful for the measurement of the low-level radioactive substances.

In addition, the solid scintillator filtering paper formed by processing the solid scintillator composition according to the present invention may be prepared by solidifying the solid scintillator composition in or on the conventional smear inspecting filtering paper used for the measurement of the degree of surface pollution in the manner as described hereinabove. It is preferred that the solid scintillator filtering paper is provided on its surface with some degree of roughness to thereby make the radioactive nuclides ready to be wiped from the surface of something polluted with a radioactive substance. The solid scintillator filtering paper according to the present invention can prevent the pollution from diffusing due to the tearing of the surface of the filtering paper, which is the problem that the conventional smear inspecting filtering paper faces. Further, in measuring the degree of surface pollution by using the liquid scintillation counter in the manner as described hereinabove, the solid scintillator filtering paper according to the present invention does not require the used filtering paper to be immersed in the liquid scintillator as in the conventional method and the filtering paper itself is simply placed as a sample to be measured. Hence, the filtering paper can be disposed of as a flammable radioactive waste after the measurement has been finished, so that the filtering paper according to the present invention can offer the extremely useful effects even in terms of radioactive waste disposal as compared with the non-flammable radioactive waste.

Furthermore, when the solid scintillator composition according to the present invention is to be employed as the sensitizer for the scintillation measurement or the scintillation-sensitive emulsion, the radioactive nuclides to be employed for the autoradiography can be measured without the use of any liquid scintillator. Hence, the solid scintillator composition according to the present invention is extremely useful for the radioactive waste disposal because no waste liquor consisting of the liquid scintillator is caused. On top of that, the use of the scintillation sensitizer or the scintillation-sensitive emulsion according to the

7

present invention can allow the amount of radiation to be measured for an extremely short exposure period of time, as compared with the conventional autoradiography, and it can increase the effect of sensitization. Furthermore, the scintillation sensitizer and the scintillation-sensitive emulsion according to the present invention are extremely advantageous in terms of production costs because they can be prepared at very low costs, as compared with conventional sensitizers for fluorography using the expensive fluorescent sensitizers and so on.

In summary, it is found that the scintillation sensitizers according to the present invention can reduce exposure time in microautoradiography to a remarkably great extent by treating the fluorescent agent to be contained in the sensitizer so as to be adapted to water and by adding the resulting scintillation sensitizer to the sample to be measured.

Further, the scintillation-sensitive emulsion according to the present invention can be prepared by adding the fluorescent agent as one component for the solid scintillator to the photographic emulsion, and the exposure time required for the microautoradiography can be shortened to a remarkable extent.

In addition, when the solid scintillator composition according to the present invention is to be employed as the scintillation-sensitive emulsion, the resulting solid scintillation composition can be processed into a film sensitive to radiation in conventional manner or coated on conventional X-ray films. In either case, the exposure time can be shortened to a great extent as compared with the application of the usual X-ray film to autoradiography.

BRIEF DESCRIPTION OF DRAWINGS

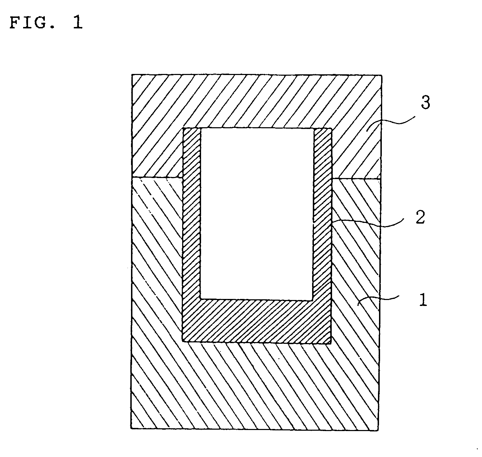

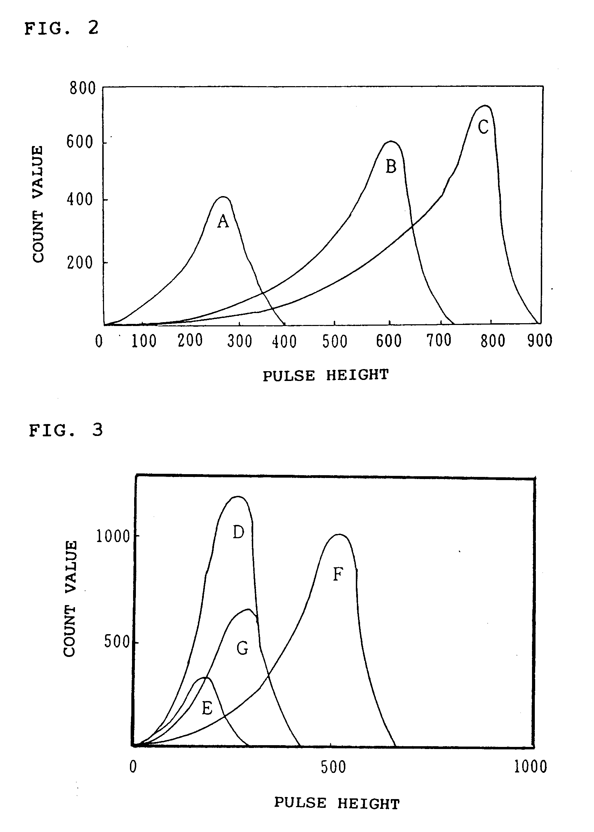

Fig. 1 is a sectional view showing an example of a solid scintillator holder according to the present invention. Fig. 2 is a graph showing an energy spectrum of $^{32}$P. Fig. 3 is a graph showing energy spectra of $^3$H and $^{14}$C.

BEST MODE FOR CARRYING OUT THE INVENTION

Examples

The present invention will be described in more detail by way of examples.

Example 1:

Procedure for forming a solid scintillator holder:

An emulsified scintillator was prepared by admixing 3 liters of toluene, 12 grams of 2,5-diphenyloxazol (DPO), 0.3 gram of 1,4-bis-2-(5-phenyl-oxazolyl)benzene (POPOP) and 1.5 liters of Triton® X-100, and approximately 100 ml of the resulting emulsified scintillator was fed with 36 ml of epoxy resin Epikote® 828 (Yuka Shell) and 4 ml of tetraethylene pentamine (Wako Jyunyaku) while being warmed in water bath at 80° C. The resulting mixture was stirred until it became homogeneous, and it was then allowed to stand at 80° C for approximately 3 hours to thereby solidify the mixture.

The solidified mixture was formed into a column having the outer diameter of 13 mm and the height of 10 mm, as shown in Fig. 1. Thereafter, a circularly concave or hollow portion having the inner diameter of 8 mm and the depth of 6 mm was formed at the middle portion in the top section of the column, thereby producing a solid scintillator holder 1. Separately, there were prepared a plastic inner container 2 that was arranged so as to engage with the hollow portion of the column, which has the outer diameter of 8 mm, the height of 5 mm, and the thickness of 1 mm. Further, a circular covering 3 was separately prepared so as to engage with the outer top portion of the column, having the diameter of 10 mm and the thickness of 2 mm. The inner container 2 and the covering 3 composes a measuring container (measuring vial).

Method of measurement:

There was diluted $^{32}$P (a solution of $H_2O_4$ and 0.09N HCl, 37 MBq) with a phosphate aqueous solution so as to amount to 77 Bq/50 $\mu$l - 1209 Bq/50 $\mu$l to thereby give a radioactive sample. The samples were prepared having five different amounts of radiation.

Further, the amount of radiation was measured with a liquid scintillation counter with a logarithmic amplifier (Beckman LS-1801) at a regional window ranging from a low energy region to a high energy region (0-100 channels).

8

The sample was placed in the inner container 2 and the container 2 was loaded to the solid scintillator holder 1. The resulting measuring container (measuring vial) was loaded to the liquid scintillation counter, and the amount of radiation of the sample was measured thereby giving a mean value of the measured values and a standard deviation. Further, the energy spectrum when the solid scintillator holder 2 was used was measured with the liquid scintillation counter.

As a result of the measurement of a background value of the solid scintillator holder, it was found that the background value thereof was 41.0 ± 3.0 cpm. Further, the result of the counting efficiency of $^{32}$P when it was measured with the liquid scintillation counter is shown in Table 1 below.

T A B L E  1

| PRESENT INVENTION | | CHERENKOV COUNTING | | LIQUID SCINTILLATOR | | READY CAP | |
|---|---|---|---|---|---|---|---|
| COUNT VALUE (cpm) (MEAN VALUE ± STANDARD DEVIATION) | COUNTING EFFICIENCY (%) | COUNT VALUE (cpm) (MEAN VALUE ± STANDARD DEVIATION) | COUNTING EFFICIENCY (%) | COUNT VALUE (cpm) (MEAN VALUE ± STANDARD DEVIATION) | COUNTING EFFICIENCY (%) | COUNT VALUE (cpm) (MEAN VALUE ± STANDARD DEVIATION) | COUNTING EFFICIENCY (%) |
| 49,517±168 | 68.6 | 26,032±114 | 35.9 | 65,965±201 | 90.4 | 66,426±172 | 91.5 |
| 23,958±124 | 68.0 | 12,681±57 | 36.0 | 32,359±129 | 92.4 | 32,512±67 | 92.2 |
| 12,858±85 | 68.4 | 6,893±63 | 36.7 | 16,636±90 | 88.5 | 17,077±90 | 90.8 |
| 6,568±73 | 68.6 | 3,302±80 | 34.5 | 8,677±87 | 90.7 | 8,847±115 | 92.4 |
| 3,116±50 | 67.4 | 1,605±27 | 34.7 | 4,159±52 | 89.9 | 4,252±61 | 91.9 |

As is apparent from the results of Table 1 above, the counting efficiency of $^{32}$P was in the range of from 67.4% to 68.6% when the solid scintillator holder according to the present invention was employed. On the other hand, as will be described hereinafter, the counting efficiency thereof when 5 ml of water was added and the sample was measured by the Cherenkov counting method was found ranging from approximately 34.5% to 36.7%, as shown in Table 1 above. Further, the counting efficiency thereof was found to be nearly 90%, as shown in Table 1 above, when the amount of radiation was measured using commercially available Ready cap (Beckman) as will be described hereinafter.

Further, when there was employed the solid scintillator holder, it was found that there was a very small deviation in the results among the samples measured.

The results of measurement of the energy spectrum of $^{32}P$ with the liquid scintillation counter are as shown in Fig. 2

It is to be noted herein that Fig. 2 is the graph showing the energy spectrum of $^{32}P$ when measured with the liquid scintillation counter, in which the curve A indicates the energy spectrum of $^{32}P$ when measured in 5 ml of water, the curve B indicates the energy spectrum thereof when measured with the solid scintillator holder, and the curve C indicates the energy spectrum of $^{32}P$ when measured with the conventional liquid scintillator.

As a result, it was found that the energy spectrum of $^{32}P$ is located on the low energy side when measured by the Cherenkov counting method, while the energy spectrum of $^{32}P$ is located on the high energy side when measured with the solid scintillator holder and in the middle region between when measured by the Cherenkov counting method and when measured with the liquid scintillator.

When a low-energy nuclide is employed in order to reduce the self-absorption in the sample, the sample should be dried before measurement. Hence, studies were made to learn an influence of the dry state of the sample containing $^{32}P$ upon the counting efficiency by comparing the sample (50 $\mu$l) placed in the solid scintillator holder under non-dry conditions with the sample (50 $\mu$l) placed therein and dried under natural conditions at room temperature for 24 hours. It was found as a result that the non-dried samples caused a decrease in the counting efficiency of $^{32}P$ by from approximately 0.5% to 1.5% from the counting efficiency thereof for the dry samples.

Influence of inclination in measuring vial:

In order to observe the influence of inclination of the solid scintillator holder in the measuring vial upon the counting efficiency of $^{32}P$, the amount of radiation of $^{32}P$ was measured with the liquid scintillation counter by placing the solid scintillator holder in its erect state in the measuring vial and placing the solid scintillator in its lying state therein. For this measurement, samples (50 $\mu$l) containing five different concentrations of $^{32}P$ (ranging from 77 Bq/50 $\mu$l to 1,209 Bq/50 $\mu$l) were prepared and they were placed in the solid scintillator holder for measurement. The results of measurement are shown in Table 2 below.

TABLE 2

| STATE OF SOLID SCINTILLATOR HOLDER | ERECT POSITION | | LYING POSITION | |
|---|---|---|---|---|
| AMOUNT OF RADIATION (Bq) | COUNT VALUE (cpm) (MEAN VALUE ± STANDARD DEVIATION) | COUNTING EFFICIENCY (%) | COUNT VALUE (cpm) (MEAN VALUE ± STANDARD DEVIATION) | COUNTING EFFICIENCY (%) |
| 1,209 | 49,517 ± 168 | 68.3 | 49,767 ± 212 | 68.6 |
| 587 | 23,969 ± 124 | 68.0 | 23,966 ± 148 | 67.8 |
| 313 | 12,858 ± 85 | 68.4 | 12,899 ± 135 | 68.6 |
| 160 | 6,568 ± 73 | 68.6 | 6,564 ± 76 | 68.6 |
| 77 | 3,116 ± 50 | 67.4 | 3,098 ± 48 | 67.0 |

It is found from the results of Table 2 above that the counting efficiency was in the range of from approximately 67.4% to 68.6% when the measurement was carried out in such a state that the solid scintillator holder was placed in its erect position in the measuring vial. On the other hand, the counting efficiency was in the range from approximately 67.0% to 68.6% when the measurement was conducted in such a state that the solid scintillator holder was placed in its lying position therein. Hence, it can be said that there is little difference between the positions of the solid scintillator holder in the measuring vial.

12

Influence of color quenchers:

In order to investigate an influence of coloring with a color quencher, experiments were carried out by pouring 50 $\mu$l of a 1% azocarmine G solution as a red quencher into the solid scintillator holder, by pouring 50 $\mu$l of a 1% aniline B solution as a blue quencher, and by adding no color quencher thereto. The experimental results are shown in Table 3 below.

TABLE 3

| COLOR QUENCHER | PRESENT INVENTION | | CHERENKOV COUNTING | | LIQUID SCINTILLATOR | | READY CAP | |
|---|---|---|---|---|---|---|---|---|
| | COUNT VALUE (cpm) (MEAN VALUE ± STANDARD DEVIATION) | COUNTING EFFICIENCY (%) | COUNT VALUE (cpm) (MEAN VALUE ± STANDARD DEVIATION) | COUNTING EFFICIENCY (%) | COUNT VALUE (cpm) (MEAN VALUE ± STANDARD DEVIATION) | COUNTING EFFICIENCY (%) | COUNT VALUE (cpm) (MEAN VALUE ± STANDARD DEVIATION) | COUNTING EFFICIENCY (%) |
| RED PIGMENT COLORED | 41,252± 158 | 56.8 | 15,273± 147 | 21.0 | 62,673± 201 | 86.4 | 58,878± 164 | 81.1 |
| NON-COLORED | 49,517± 168 | 68.3 | 26,032± 114 | 35.9 | 65,965± 161 | 90.9 | 66,426± 172 | 91.5 |
| BLUE PIGMENT COLORED | 21,906± 143 | 62.2 | 8,764± 96 | 24.9 | 30,973± 159 | 87.8 | 29,462± 209 | 83.6 |
| NON-COLORED | 23,969± 124 | 68.0 | 12,681± 157 | 36.0 | 32,359± 129 | 92.4 | 32,512± 167 | 92.2 |

Table 3 reveals that, when the sample was colored with the red quencher, the count value was reduced by approximately 11.5% as compared with the sample with no quencher added thereto and, when the sample was colored with the blue quencher, the count value was reduced by approximately 5% as compared with the sample with no quencher added thereto.

Example 2:

A solid scintillator holder was prepared in the same manner as in Example 1. Experiments were carried out by taking out the plastic inner container having the thickness of 1 mm, mounted to the solid scintillator holder in Example 1, in order to avoid an influence of the plastic inner container and placing the sample directly into the solid scintillator holder. As a result, it was found that the counting efficiency was approximately 90% as high as when measured with Ready cap. Further, the other results of measurement in this case were almost the same as those obtained in Example 1.

Example 3:

A solid scintillator holder was prepared in substantially the same manner as in Example 1, except for the use of para-xylene in place of toluene. With this solid scintillator holder, the counting efficiency of $^{32}$P, the influence of inclination of the solid scintillator, and the influence of color quenchers were tested in the same manner as in Example 1. As a result, the test results were almost the same as those obtained in Example 1.

Comparative Example 1:

The measurement was performed in the same manner as in Example 1, except for the addition of 5 ml of water (index of refraction = 1.33) to the sample used in Example 1 and the measurement conducted in accordance with the Cherenkov counting method.

The background value measured by the Cherenkov counting method for a glass vial containing 5 ml of water was 29.3 ± 2.5 cpm. On the other hand, as is apparent from Table 1 above, the counting efficiency of $^{32}$P in this comparative example was in the range of from approximately 34.5% to 36.7%. Further, it is found from Fig. 2 that the energy spectrum of $^{32}$P in this comparative example was located on the lower energy side than either of when the solid scintillator holder was employed or when the liquid scintillator was employed. In addition, as a result of investigation of the influence of the color quenchers made in the same manner as in Example 1, it was found apparent from Table 3 above that the solid scintillator holder prepared in this comparative example was subject to strong influence from the color quenchers regardless of their kind.

Comparative Example 2:

The measurement was performed in the same manner as in Example 1, except for the addition of 5 ml of a liquid scintillator (ACS-2, Amersham) to the sample used in Example 1.

The background value in this case was 35.5 ± 2.1 cpm. On the other hand, as is apparent from Table 1 above, the counting efficiency of $^{32}$P in this comparative example was in the range of from approximately 88% to 92%. Further, it is found from Fig. 2 that the energy spectrum of $^{32}$P in this comparative example was located on the higher energy side than either of when the solid scintillator holder was employed and when water was added to the sample as in Comparative Example 1. In addition, as a result of investigation of the influence of the color quenchers made in the same manner as in Example 1, it was found apparent from Table 3 above that the solid scintillator holder prepared in this comparative example provided substantially the same results as in Example 1 even when each of the color quenchers was employed.

Comparative Example 3:

The measurement was performed in the same manner as in Example 1, except for the use of the commercially available Ready cap (Beckman) in place of the solid scintillator holder used in Example 1.

The background value in this case was 38.0 ± 3.0 cpm. On the other hand, as is apparent from Table 1 above, the counting efficiency of $^{32}$P in this comparative example was in the range of from approximately 90% to 92%. Further, it is found apparent from Table 3 that the use of the red quencher caused a decrease in the counting efficiency of $^{32}$P by approximately 10% and the blue quencher caused a decrease in the counting efficiency thereof by approximately 8%. The other results were substantially the same as in Example 1 when the color quenchers were employed.

Example 4:

The measurement was carried out in substantially the same manner as in Example 1 by using L-[2,3-$^3$H]proline (185 MBq) as a radioactive substance. More specifically, the $^3$H solutions having three different concentrations of the radioactive substance were prepared. A filter sample was prepared by adding the $^3$H solution (25 $\mu$l) to a glass filter having the diameter of 5 mm and the thickness of 1 mm. The filter sample was placed in the solid scintillator holder, followed by transferring it to the measuring vial and measuring it with the liquid scintillation counter (Model LS-1801 Type, Beckman) in substantially the same manner as in Example 1.

The counting efficiency of $^3$H when the solid scintillator holder according to the present invention was employed is shown in Table 4 below.

TABLE 4

| AMOUNT OF RADIATION OF $^3$H (Bq) | SOLID SCINTILLATOR HOLDER | |
|---|---|---|
| | COUNT VALUE (cpm) (MEAN VALUE ± STANDARD DEVIATION) | COUNTING EFFICIENCY (%) |
| 1,486 | 5,927 ± 98 | 6.6 |
| 710 | 2,547 ± 36 | 6.0 |
| 388 | 1,333 ± 23 | 5.7 |

Then, the measurement was performed in substantially the same manner as in Example 1 by adding 10 $\mu$l of a 1% azocarmine G solution as a red quencher. The results are shown in Table 5 below.

TABLE 5

| RED QUENCHER | PRESENT INVENTION | |
|---|---|---|
| | COUNT VALUE (cpm) (MEAN VALUE ± STANDARD DEVIATION) | COUNTING EFFICIENCY (%) |
| COLORED SAMPLE | 5,711 ± 56 | 6.4 |
| NON-COLORED SAMPLE | 5,927 ± 98 | 6.6 |

Further, the measurement was performed in substantially the same manner as in Example 1 by adding 10 $\mu$l of a 1% aniline B solution as a blue quencher. The results are shown in Table 6 below.

TABLE 6

| BLUE QUENCHER | PRESENT INVENTION | |
|---|---|---|
| | COUNT VALUE (cpm) (MEAN VALUE ± STANDARD DEVIATION) | COUNTING EFFICIENCY (%) |
| COLORED SAMPLE | 2,133 ± 51 | 5.0 |
| NON-COLORED SAMPLE | 2,547 ± 36 | 6.0 |

Comparative Example 4:

The measurement was performed in substantially the same manner as in Example 4, except for the addition of 5 ml of a toluene scintillator used conventionally as a liquid scintillator to the $^3$H solution used in Example 4.

The counting efficiency of $^3$H in this comparative example is shown in Table 7 below.

TABLE 7

| AMOUNT OF RADIATION OF $^3$H (Bq) | SOLID SCINTILLATOR | |
|---|---|---|
| | COUNT VALUE (cpm) (MEAN VALUE ± STANDARD DEVIATION) | COUNTING EFFICIENCY (%) |
| 1,486 | 36,883 ± 212 | 41.4 |
| 710 | 19,351 ± 152 | 45.4 |
| 388 | 97,326 ± 136 | 42.1 |

Then, the measurement was performed in substantially the same manner as in Example 4 by adding 10 μl of a 1% azocarmine G solution as a red quencher. The results are shown in Table 8 below.

TABLE 8

| RED QUENCHER | LIQUID SCINTILLATOR | |
|---|---|---|
| | COUNT VALUE (cpm) (MEAN VALUE ± STANDARD DEVIATION) | COUNTING EFFICIENCY (%) |
| COLORED SAMPLE | 30,566 ± 128 | 34.3 |
| NON-COLORED SAMPLE | 36,883 ± 212 | 41.4 |

Further, the measurement was performed in substantially the same manner as in Example 4 by adding 10 μl of a 1% aniline B solution as a blue quencher. The results are shown in Table 9 below.

TABLE 9

| BLUE QUENCHER | LIQUID SCINTILLATOR | |
|---|---|---|
| | COUNT VALUE (cpm) (MEAN VALUE ± STANDARD DEVIATION) | COUNTING EFFICIENCY (%) |
| COLORED SAMPLE | 19,107 ± 78 | 44.8 |
| NON-COLORED SAMPLE | 19,351 ± 152 | 45.4 |

Comparative Example 5:

The measurement was performed in substantially the same manner as in Example 4, except for the use of the commercially available Ready cap in place of the solid scintillator holder used in Example 4.

The counting efficiency of $^3$H in this comparative example is shown in Table 10 below.

## EP 0 583 475 A1

TABLE 10

| AMOUNT OF RADIATION OF $^3H$ (Bq) | READY CAP | |
|---|---|---|
| | COUNT VALUE (cpm) (MEAN VALUE ± STANDARD DEVIATION) | COUNTING EFFICIENCY (%) |
| 1,486 | 26,447 ± 89 | 29.7 |
| 710 | 12,159 ± 121 | 28.5 |
| 388 | 7,277 ± 74 | 31.3 |

Then, the measurement was performed in substantially the same manner as in Example 4 by adding 10 $\mu$l of a 1% azocarmine G solution as a red quencher. The results are shown in Table 11 below.

TABLE 11

| RED QUENCHER | READY CAP | |
|---|---|---|
| | COUNT VALUE (cpm) (MEAN VALUE ± STANDARD DEVIATION) | COUNTING EFFICIENCY (%) |
| COLORED SAMPLE | 14,755 ± 66 | 16.5 |
| NON-COLORED SAMPLE | 26,447 ± 89 | 29.7 |

Further, the measurement was performed in substantially the same manner as in Example 4 by adding 10 $\mu$l of a 1% aniline B solution as a blue quencher. The results are shown in Table 12 below.

TABLE 12

| BLUE QUENCHER | READY CAP | |
|---|---|---|
| | COUNT VALUE (cpm) (MEAN VALUE ± STANDARD DEVIATION) | COUNTING EFFICIENCY (%) |
| COLORED SAMPLE | 8,419 ± 90 | 19.8 |
| NON-COLORED SAMPLE | 12,159 ± 121 | 28.5 |

Example 5:

The measurement was carried out in substantially the same manner as in Example 1 by using D-[$^{14}$C-(U)]fructose (37 MBq) as a radioactive substance. More specifically, the $^{14}$C solutions having three different concentrations of the radioactive substance were prepared. A filter sample was prepared by adding the $^{14}$C solution (25 $\mu$l) to a glass filter having the diameter of 5 mm and the thickness of 1 mm. The filter sample was placed in the solid scintillator holder, followed by transferring it to the measuring vial and measuring it with the liquid scintillation counter (Model LS-1801 Type, Beckman) in substantially the same manner as in Example 1.

The counting efficiency of $^{14}$C when the solid scintillator holder according to the present invention was employed is shown in Table 13 below.

18

TABLE 13

| AMOUNT OF RADIATION OF $^{14}$C (Bq) | SOLID SCINTILLATOR HOLDER | |
|---|---|---|
| | COUNT VALUE (cpm) (MEAN VALUE ± STANDARD DEVIATION) | COUNTING EFFICIENCY (%) |
| 3,054 | 60,209 ± 294 | 32.9 |
| 1,821 | 35,576 ± 212 | 32.6 |
| 922 | 19,734 ± 196 | 35.7 |

Then, the measurement was performed in substantially the same manner as in Example 1 by adding 10 $\mu$l of a 1% azocarmine G solution as a red quencher. The results are shown in Table 14 below.

TABLE 14

| RED QUENCHER | PRESENT INVENTION | |
|---|---|---|
| | COUNT VALUE (cpm) (MEAN VALUE ± STANDARD DEVIATION) | COUNTING EFFICIENCY (%) |
| COLORED SAMPLE | 55,128 ± 344 | 30.0 |
| NON-COLORED SAMPLE | 60,209 ± 394 | 32.9 |

Further, the measurement was performed in substantially the same manner as in Example 1 by adding 10 $\mu$l of a 1% aniline B solution as a blue quencher. The results are shown in Table 15 below.

TABLE 15

| BLUE QUENCHER | PRESENT INVENTION | |
|---|---|---|
| | COUNT VALUE (cpm) (MEAN VALUE ± STANDARD DEVIATION) | COUNTING EFFICIENCY (%) |
| COLORED SAMPLE | 2,133 ± 51 | 5.0 |
| NON-COLORED SAMPLE | 2,547 ± 36 | 6.0 |

Comparative Example 6:

The measurement was performed in substantially the same manner as in Example 5, except for the addition of 5 ml of a toluene scintillator used conventionally as a liquid scintillator to the $^3$H solution used in Example 5.

The counting efficiency of $^{14}$C in this comparative example is shown in Table 16 below.

**EP 0 583 475 A1**

TABLE 16

| AMOUNT OF RADIATION OF $^3$H (Bq) | LIQUID SCINTILLATOR | |
|---|---|---|
| | COUNT VALUE (cpm) (MEAN VALUE ± STANDARD DEVIATION) | COUNTING EFFICIENCY (%) |
| 3,054 | 134,450 ± 487 | 73.4 |
| 1,821 | 80,941 ± 344 | 74.0 |
| 922 | 38,629 ± 182 | 69.8 |

Then, the measurement was performed in substantially the same manner as in Example 5 by adding 10 $\mu$l of a 1% azocarmine G solution as a red quencher. The results are shown in Table 17 below.

TABLE 17

| RED QUENCHER | LIQUID SCINTILLATOR | |
|---|---|---|
| | COUNT VALUE (cpm) (MEAN VALUE ± STANDARD DEVIATION) | COUNTING EFFICIENCY (%) |
| COLORED SAMPLE | 130,569 ± 384 | 87.8 |
| NON-COLORED SAMPLE | 134,456 ± 487 | 73.4 |

Further, the measurement was performed in substantially the same manner as in Example 5 by adding 10 $\mu$l of a 1% aniline B solution as a blue quencher. The results are shown in Table 18 below.

TABLE 18

| BLUE QUENCHER | LIQUID SCINTILLATOR | |
|---|---|---|
| | COUNT VALUE (cpm) (MEAN VALUE ± STANDARD DEVIATION) | COUNTING EFFICIENCY (%) |
| COLORED SAMPLE | 19,107 ± 78 | 44.8 |
| NON-COLORED SAMPLE | 19,351 ± 152 | 45.4 |

Comparative Example 7:

The measurement was performed in substantially the same manner as in Example 5, except for the use of the commercially available Ready cap in place of the solid scintillator holder used in Example 5.
The counting efficiency of $^3$H in this comparative example is shown in Table 19 below.

20

TABLE 19

| AMOUNT OF RADIATION OF $^{14}$C (Bq) | READY CAP | |
|---|---|---|
| | COUNT VALUE (cpm) (MEAN VALUE ± STANDARD DEVIATION) | COUNTING EFFICIENCY (%) |
| 3,054 | 156,608 ± 257 | 85.5 |
| 1,821 | 93,572 ± 334 | 85.6 |
| 922 | 45,385 ± 175 | 82.0 |

Then, the measurement was performed in substantially the same manner as in Example 5 by adding 10 μl of a 1% azocarmine G solution as a red quencher. The results are shown in Table 20 below.

TABLE 20

| RED QUENCHER | READY CAP | |
|---|---|---|
| | COUNT VALUE (cpm) (MEAN VALUE ± STANDARD DEVIATION) | COUNTING EFFICIENCY (%) |
| COLORED SAMPLE | 78,419 ± 151 | 42.8 |
| NON-COLORED SAMPLE | 156,608 ± 257 | 85.5 |

Further, the measurement was performed in substantially the same manner as in Example 5 by adding 10 μl of a 1% aniline B solution as a blue quencher. The results are shown in Table 21 below.

TABLE 21

| BLUE QUENCHER | READY CAP | |
|---|---|---|
| | COUNT VALUE (cpm) (MEAN VALUE ± STANDARD DEVIATION) | COUNTING EFFICIENCY (%) |
| COLORED SAMPLE | 8,419 ± 90 | 19.8 |
| NON-COLORED SAMPLE | 12,159 ± 121 | 28.5 |

Example 6:

Preparation of solid scintillation filtering paper:

A mixed solution was prepared by admixing 3 liters of toluene, 12 grams of 2,5-diphenyloxazol (DPO), 0.3 gram of 1,4-bis-2-(5-phenyl-oxazolyl)benzene (POPOP) and 1.5 liters of Triton® X-100, and approximately 100 ml of the resulting mixture was fed with 36 ml of epoxy resin Epikote® 828 (Yuka Shell) and 4 ml of tetraethylene pentamine while being warmed in water bath at 80° C. The resulting mixture was stirred until it became homogeneous, and 2 ml of the mixture was then dropped onto a central portion of a smear filtering paper (Type A; Chiyoda Hoan Yohin K.K.) and allowed to soak therein, followed by allowing to stand at 80° C for approximately 3 hours for drying. The resulting filtering paper was provided on its central surface area with a plurality of convex and concave rough sections to thereby give a solid scintillation filtering paper.

Procedure of the preparation of a sample for use in tests on wiping performance:

A sample for use in the tests on wiping performance was prepared in the manner as will be described hereinafter. The radioactive nuclides used were $^3$H, $^{14}$C, and $^{125}$I, and each of them was diluted with a given quantity of water. A given quantity of the resulting aqueous solution was dropped onto the surface of each of an acrylic plate (Mitsubishi Rayon) and a polyvinyl chloride filtering paper (Chiyoda Hoan Yohin K.K.), each having the diameter of approximately 5 mm. Thereafter, the filtering paper was allowed to stand at room temperature for 24 hours to thereby give a sample for testing wiping performance.

Procedure for the measurement of the degree of surface pollution:

The testing procedure for the measurement of the degree of surface pollution was performed by rubbing the surface of the sample with the solid scintillation filtering paper ten times, each in the left and right directions and in the upward and downward directions, in such a manner that the force of rubbing was applied uniformly, thereby wiping the radioactive nuclides present on the surface of the sample.

The solid scintillation filtering paper used for wiping out the radioactive nuclides was then placed in the measuring vial and it was measured for the amounts of radiation of $^3$H and $^{14}$C with the liquid scintillation counter and for the amount of radiation of $^{125}$I with a NaI (TI) scintillation counter. The counting efficiency of $^3$H, $^{14}$C, and $^{125}$I is shown in Table 22 below.

TABLE 22

| RADIOACTIVE NUCLIDES | ACRYLIC PLATE | | POLYVINYL CHLORIDE FILTERING PAPER | |
|---|---|---|---|---|
| SOLID SCINTILLATION FILTERING PAPER | COUNT VALUE (cpm) (MEAN VALUE ± STANDARD DEVIATION) | COUNTING EFFICIENCY (%) | COUNT VALUE (cpm) (MEAN VALUE ± STANDARD DEVIATION) | COUNTING EFFICIENCY (%) |
| $^3$H | 1,974 ± 146 | 0.4 | 76 ± 5 | 0.017 |
| $^{14}$C | 29,017 ± 260 | 15.9 | 133 ± 8 | 0.073 |
| $^{125}$I | 23,635 ± 62 | 7.9 | 772 ± 28 | 0.257 |

The rate of the count value (the cpm value) of the solid scintillation filtering paper with respect to the amount of radiation (a dpm value) of the radioactive nuclide dropped onto each of the acrylic plate and the polyethylene chloride filtering paper, each used as the polluted surface for the experiments, was computed, and the rate was determined as total efficiency.

It is noted herein that the background value of the solid scintillation filtering paper used in this example was 45 ± 5 cpm when measured with the liquid scintillation counter and 18 ± 4 cpm when measured with the NaI scintillation counter.

As is apparent from the results of measurement, when the solid scintillation filtering paper was measured for its amount of radiation with the liquid scintillation counter or the NaI scintillation counter, the efficiency of wiping $^3$H, $^{14}$C, and $^{125}$I from the surface of the acrylic plate was approximately 0.45%, 15.9%, and 7.9%, respectively, and the efficiency of wiping $^3$H, $^{14}$C, and $^{125}$I from the surface of the permeable polyethylene filtering paper was approximately 0.02%, 0.07%, and 0.26%, respectively. It is found that these values are higher than the results obtained with conventional smear filtering paper used as a comparative example as will be described hereinafter. In particular, when $^{125}$I was measured with the NaI scintillation counter, the solid scintillation filtering paper according to the present invention as employed in this example can offer the efficiency of wiping $^{125}$I by approximately three times the conventional smear filtering paper can.

On the other hand, the solid scintillation filtering paper according to the present invention can achieve the efficiency of wiping $^3$H and $^{14}$C, which are low energy nuclides, higher than the conventional smear filtering paper; however, no remarkably great difference can be recognized between the solid scintillation filtering paper according to the present invention and the conventional smear filtering paper because $^3$H and $^{14}$C are considered to cause self-absorption. In this case, however, it can be noted that the count value can be raised by approximately two times or three times by adding 5 ml of a conventional liquid scintillator to the solid scintillation filtering paper with which the nuclides were wiped and soaking it therein.

Further, it should be noted that nothing was removed from the surface of the solid scintillation filtering paper used in this example as the surface of the polluted material was rubbed with the solid scintillation filtering paper.

Observation of the state of the wiped surface:

In order to observe the state of the surface of the polluted material which was wiped with the solid scintillation filtering paper according to the present invention, an X-ray film (XAR-5: Kodak) was placed on each of the sample used for the wiping experiments and the solid scintillation filtering paper used for the wiping performance test. The X-ray film was then exposed thereto for approximately 5 days, followed by developing and fixing the exposed X-ray films in conventional manner.

As a result of visual observation of the fixed X-ray films, it was found that a strongly radioactive trace was observed in the surface area from which the nuclides were wiped with the solid scintillation filtering paper according to the present invention used in this example, yet pollution was little recognized in the area around the area from which the nuclides were wiped therewith. Further, it was found that the polluted area was not diffused by rubbing the surface of the polluted material with the solid scintillation filtering paper according to the present invention and wiping the radioactive nuclides from the surface of the polluted material therewith.

Example 7:

A solid scintillation filtering paper was prepared in substantially the same manner as in Example 6, except for the use of para-xylene in place of toluene and the efficiency of wiping the nuclides therewith was visually observed in the same manner as in Example 6. The test results revealed that the solid scintillation filtering paper prepared in Example 6 achieved the wiping efficiency to such an extent as attained by the solid scintillation filtering paper prepared in Example 6.

Comparative Example 8:

The tests were carried out in the same manner as in Example 7, except for the use of the conventional smear filtering paper in place of the solid scintillation filtering paper used for the tests conducted in Example 7. The amounts of radiation from the samples were measured in the same manner as in Example 7 and the results are shown in Table 23 below.

T A B L E   23

| SMEAR FILTER-ING PAPER | RADIO-ACTIVE NUCLIDES | ACRYLIC PLATE | | POLYVINYL CHLORIDE FILTERING PAPER | |
|---|---|---|---|---|---|
| | | COUNT VALUE (cpm) (MEAN VALUE ± STANDARD DEVIATION) | COUNTING EFFI-CIENCY (%) | COUNT VALUE (cpm) (MEAN VALUE ± STANDARD DEVIATION) | COUNTING EFFI-CIENCY (%) |
| | $^3$H | 1,605 ± 26 | 0.3 | 61 ± 11 | 0.014 |
| | $^{14}$C | 21,922 ± 196 | 12.1 | 125 ± 9 | 0.069 |
| | $^{125}$I | 7,692 ± 35 | 2.6 | 183 ± 11 | 0.061 |

Example 8:

Procedure for the preparation of a scintillation sensitizer:

A solution was prepared by admixing 1.5 liters of toluene, 12 grams of 2,5-diphenyloxazole (DPO), 0.3 gram of 1,4-bis-2-(5-phenyl-oxazolyl)benzene (POPOP), and 1.5 liters of Triton® X-100, and 100 ml of the solution was admixed with 18 ml of epoxy resin Epikote® and 2 ml of tetraethylene pentamine until the mixture became homogeneous while it was warmed in a water bath at 80° C, thereby yielding a scintillation sensitizer.

Procedure for the preparation of a radioactive sample:

As a radioactive sample, there was prepared a $^3$H sample by adjusting a solution of L-[2,3-$^3$H]proline (185 MBq) so as for the amount of radiation of $^3$H to amount to 110-456 Bq per 25 $\mu$l of the solution.

Autoradiography (comparison of a degree of density or blackening):

Into a permeable filtering paper was soaked each of 25 $\mu$l of the $^3$H sample having the three different concentrations (110 Bq - 458 Bq per 25 $\mu$l), and the filtering paper was dried, followed by soaking 5 ml of the resulting scintillation sensitizer into the dried filtering paper. The dried filtering paper was then covered with a polyvinyl chloride resin film (Krewrap®; Kureha Kagaku Kogyo K.K.) and attached closely to an X-ray film (AR-5; Kodak) within a cassette, followed by exposing the X-ray film to the $^3$H sample soaked into the filtering paper at -80° C over a period of time ranging from 18 hours to 48 hours. After the exposure has been finished, the resulting X-ray film was developed and fixed.

As a result, it was found that a general image was detected even after the exposure over as short as 18 hours and that the exposure over 48 hours gave a definite image for each of all the three $^3$H samples.

Measurement of the amount of radiation:

The scintillation sensitizer was soaked in the $^3$H sample, and the amount of radiation of $^3$H was measured with the liquid scintillation counter. The results are shown in Table 24 below.

TABLE 24

| AMOUNT OF RADIATION OF $^3$H (Bq) | SCINTILLATION SENSITIZER | | TOLUENE SCINTILLATOR | | EN$^3$HANCE® | |
|---|---|---|---|---|---|---|
| | COUNT VALUE (cpm) (MEAN VALUE ± STANDARD VARIATION) | COUNTING EFFICIENCY (%) | COUNT VALUE (cpm) (MEAN VALUE ± STANDARD VARIATION) | COUNTING EFFICIENCY (%) | COUNT VALUE (cpm) (MEAN VALUE ± STANDARD VARIATION) | COUNTING EFFICIENCY (%) |
| 456 | 1,457±36 | 5.5 | 6,874±120 | 25.0 | 147±6 | 0.5 |
| 215 | 777±26 | 6.0 | 3,347± 32 | 25.8 | 194±7 | 1.5 |
| 110 | 395±22 | 5.9 | 1,690± 17 | 25.6 | 95±5 | 1.4 |

As is apparent from the results as shown in Table 24, the scintillation sensitizers as prepared in Example 8 gave the counting efficiency of $^3$H at the rate ranging from approximately 5.5% to 6.0%.

The energy spectra observed by the scintillation sensitizers with the liquid scintillation counter are as shown in Fig. 3. As shown in Fig. 3, the curved line D indicates the energy spectrum of $^3$H in 5 ml of a conventional liquid scintillator cocktail and the curved line E indicates the energy spectrum thereof in 0.5 ml of the scintillation sensitizer as prepared in Example 8.

Comparative Example 9:

The autoradiography and the measurement of the amount of radiation were performed in substantially the same manner as in Example 8, except for the use of the radioactive sample prepared by adding 5 ml of the conventional liquid scintillator cocktail to the $^3$H sample.

As a result of the autoradiography, it was found that no image was detected whatsoever on the X-ray film over the exposure period of time ranging from 18 hours to 48 hours.

Further, it was found as a result of the measurement of the amount of radiation of $^3$H that, as shown in Table 24 above, the counting efficiency of $^3$H was in the range of approximately 25.0% to 25.8%.

In addition, the energy spectrum of $^3$H for the conventional scintillation sensitizer in this comparative example was observed. The results are as shown in Fig. 3. As is apparent from Fig. 3, it was found that the energy spectrum thereof for the conventional scintillation sensitizer was positioned on the higher energy side than the scintillation sensitizer as prepared in Example 8.

Comparative Example 10:

The autoradiography and the measurement of the amount of radiation were performed in substantially the same manner as in Example 8, except for the use of EN$^3$HANCE® commercially available for fluorography, in place of the scintillation sensitizer used in Example 8.

As a result of the autoradiography, it was found that no image was detected whatsoever for each of the three different $^3$H samples on the X-ray film over the exposure period of time of 18 hours and that, when exposed for 48 hours, an image was detected for two out of the three samples. Further, it was found that, as shown in Table 24, the counting efficiency of $^3$H was in the range of approximately 0.5% to 1.5%.

Example 9:

The autoradiography and the measurement of the amount of radiation of $^{14}$C were performed in substantially the same manner as in Example 8, except for the use of a $^{14}$C sample prepared by diluting D-[$^{14}$C(U)]fructose (37 MBq) and adjusting it so as for the amount of radiation of $^{14}$C to amount to 57-253 Bq per 25 $\mu$l of the solution, in place of the $^3$H sample.

As a result of autoradiography, it was found that an image for each of the three different samples was detected after the exposure over the period of time of 18 hours and that an apparent improvement in sensitization was recognized after the exposure over the period of time of 48 hours, as compared with the commercially available sensitizer, i.e. EN$^3$HNACE, as will be described hereinafter.

Further, the measurement of the amount of radiation of $^{14}$C revealed that the scintillation sensitizers as prepared in Example 9 gave the counting efficiency of $^{14}$C in the range of from approximately 43.9% to 45.5% as shown in Table 25.

28

T A B L E   25

| AMOUNT OF RADIATION OF $^{14}$C (Bq) | SCINTILLATION SENSITIZER | | TOLUENE SCINTILLATOR | | EN$^3$HANCE® | |
|---|---|---|---|---|---|---|
| | COUNT VALUE (cpm) (MEAN VALUE ± STANDARD VARIATION) | COUNTING EFFICIENCY (%) | COUNT VALUE (cpm) (MEAN VALUE ± STANDARD VARIATION) | COUNTING EFFICIENCY (%) | COUNT VALUE (cpm) (MEAN VALUE ± STANDARD VARIATION) | COUNTING EFFICIENCY (%) |
| 253 | 6,666±51 | 43.9 | 11,596±126 | 76.4 | 2,146±42 | 14.1 |
| 125 | 3,424±30 | 45.5 | 5,752±39 | 76.7 | 1,009±27 | 13.4 |
| 57 | 1,511±43 | 44.5 | 2,648±70 | 77.4 | 401±27 | 11.8 |

The energy spectra observed by the scintillation sensitizers with the liquid scintillation counter are as shown in Fig. 3. As shown in Fig. 3, the curved line F indicates the energy spectrum of $^{14}$C in 5 ml of a conventional liquid scintillator cocktail and the curved line G indicates the energy spectrum thereof in 0.5 ml of the scintillation sensitizer as prepared in Example 9.

29

Comparative Example 11:

The autoradiography and the measurement of the amount of radiation were performed in substantially the same manner as in Example 9, except for the use of the radioactive sample prepared by adding 5 ml of the conventional liquid scintillator cocktail to the $^{14}$C sample.

As a result of the autoradiography, it was found that no image was detected whatsoever on the X-ray film over the exposure period of time ranging from 18 hours to 48 hours.

Further, it was found that, as shown in Table 25, the counting efficiency of $^{14}$C was in the range of approximately 76.4% to 77.4%.

In addition, the energy spectrum of $^{14}$C for the conventional scintillation sensitizer in this comparative example was observed. The results are as shown in Fig. 3. As is apparent from Fig. 3, it was found apparent that the energy spectrum thereof for the conventional scintillation sensitizer was positioned on the higher energy side than the scintillation sensitizer as prepared in Example 9.

Comparative Example 12:

The autoradiography and the measurement of the amount of radiation were performed in substantially the same manner as in Example 9, except for the use of EN$^{3}$HANCE® commercially available for fluorography, in place of the scintillation sensitizer used in Example 9.

As a result of the autoradiography, it was found that no image was detected whatsoever for each of the three different $^{14}$C samples on the X-ray film over the exposure period of time of 18 hours and that, when exposed for 48 hours, an image was detected from two out of the three samples.

Further, it was found as a result of the measurement of the amount of radiation of $^{14}$C that, as shown in Table 25 above, the counting efficiency of $^{14}$C was in the range of approximately 11.8% to 14.1%.

Example 10:

A scintillation sensitizer was prepared by adding an equal amount of a 1% gelatin aqueous solution to a mixture of 30 ml of toluene, 0.12 gram of DPO, 0.03 gram of 1,4-bis-2-(5-phenyl-oxazolyl)benzene (POPOP), and 1500 ml of Triton® X-100 while warming the mixture at 40° C, stirring the resulting mixture until the mixture became homogeneous, and allowing to stand for approximately 30 minutes under natural conditions after the measuring sample was added thereto.

A paraffin tissue section of a tissue labelled with each of labelling substances was subjected to removal of paraffin with xylol, followed by washing with water, adding the scintillation sensitizer to the cut section, and drying it. To the resulting sample was added a fluorescent emulsion (Sakura NR-M2) and the sample was placed on an X-ray film for exposure over the period of 7 days at -4° C. After the exposure was finished, the X-ray film was developed and fixed. As a result, it was found that the scintillation sensitizer as prepared in Example 10 could shorten the exposure time by several times a conventional procedure as will be described hereinafter.

More specifically, the micro-autoradiography and the macro-autoradiography using the scintillation sensitizer according to the present invention can shorten the exposure time for the $^{3}$H, $^{14}$C, $^{35}$S and $^{45}$Ca samples by approximately three to ten times the conventional procedure.

Comparative Example 13:

A paraffin tissue section was treated in substantially the same manner as in Example 10 by subjecting the tissue section to removal of paraffin with an alcohol such as xylol, washing the tissue section with water, and adding an emulsion (Sakura NR-M2) to the tissue section. After drying, the sample was exposed to an X-ray film for seven days at -4° C, followed by developing the resulting X-ray film and fixing it. As a result, it was found that no image of the isotope was detected in this case even when it was dyed.

Example 11:

A scintillation sensitizer containing a $^{3}$H aqueous solution having each of three different concentrations of $^{3}$H (694 Bq - 2,400 Bq per 10 ml) was poured onto a slide glass panel and allowed to stand for drying. The surface of the glass panel was covered with a lamellar film and exposed to an X-ray film (XAR-5; Kodak) at -80° C over the periods of time of 24 hours, 48 hours, and 96 hours. After the exposure was finished, the X-ray film was developed, fixed and dyed. As a result of observation, it was found that an image was detected upon exposure for any exposure period of time.

Comparative Example 14:

The experiment was carried out in substantially the same manner as in Example 11, except for the use of a slide glass panel onto which the $^3$H aqueous solution was poured. In this case, no image was detected whatsoever from the three different samples.

Example 12:

A scintillation sensitizer emulsion was prepared by adding an equal amount of a 1% gelatin aqueous solution to a mixture of 30 ml of toluene, 0.12 gram of DPO, 0.03 gram of 1,4-bis-2-(5-phenyl-oxazolyl)-benzene (POPOP), and 1500 ml of Triton® X-100 while warming the mixture at 40° C, stirring the resulting mixture until the mixture became homogeneous, and allowing to stand for approximately 30 minutes under natural conditions after a photographic emulsion (SAKURA NR-M2) was added thereto.

A paraffin tissue section of a tissue labelled with $^3$H was subjected to removal of paraffin with xylol, followed by washing with water, adding the scintillation sensitizer emulsion to the cut section, and drying it. The resulting sample was exposed to an X-ray film for exposure over the period of 7 days at -4° C. After the exposure was finished, the X-ray film was developed, fixed and dyed. As a result, it was found that an image of the isotope was detected clearly.

In addition, the micro-autoradiography and the macro-autoradiography using the scintillation-sensitive emulsion to be used for the present invention can shorten the exposure time for the $^{14}$C, $^{35}$S and $^{45}$Ca samples by approximately three to ten times the conventional procedures.

Comparative Example 15:

A paraffin tissue section was treated in substantially the same manner as in Example 12 by subjecting the tissue section to removal of paraffin with an alcohol such as xylol, washing the tissue section with water, and adding an emulsion (Sakura NR-M2) to the tissue section. After drying, the sample was exposed to an X-ray film for seven days at -4° C, followed by developing the resulting X-ray film and fixing it. As a result, it was found that no image of the isotope was detected in this case even when it was dyed.

INDUSTRIAL APPLICABILITY

As an aspect of the present invention, the solid scintillator composition according to the present invention presents the great advantages that, when it is processed into, for example, solid scintillator holder and so on, the sample and the solid scintillator holder can be re-employed as well as the measuring vial to which the solid scintillator holder is mounted can also be re-employed without washing. The solid scintillator holder and other forms prepared from the solid scintillator composition according to the present invention can offer the very useful merits in terms of radioactive waste disposal because they do not cause a large volume of radioactive waste, unlike the liquid scintillator to be employed for liquid scintillation.

In another aspect of the present invention, the solid scintillator composition according to the present invention can be used for measuring the degree of surface pollution with a radioactive substance when the solid scintillator composition is processed into, for example, solid scintillation filtering paper and any other products. In this case, for example, the solid scintillation filtering paper does not require a large quantity of the liquid scintillator for the measurement of the degree of surface pollution so that no large quantity of radioactive waste is produced because no large quantity of the liquid scintillator is required. Further, the surface of the filtering paper according to the present invention is not torn easily so that the filtering paper according to the present invention causes no risk that pollution with the radioactive substance is caused to diffuse, unlike the conventional filtering paper for use in inspection of the degree of surface pollution.

In a further aspect of the present invention, the solid scintillator composition according to the present invention can be employed for the scintillation sensitizer or the scintillation-sensitive emulsion. The use of the scintillation sensitizer or the scintillation-sensitive emulsion can shorten the exposure period of time to a great extent, as compared with the conventional procedures. Hence, the present invention can offer the great advantage that the time required for experiments can be shortened so that the results of experiments can be confirmed and determined for a shorter period of time than the conventional techniques.

**Claims**

1. A solid scintillator composition characterized by an emulsified scintillator and a solidifying agent for solidifying said emulsified scintillator.

2. A solid scintillator composition as claimed in claim 1, wherein said emulsified scintillator comprises a solvent, a fluorescent agent, and an emulsifying agent.

3. A solid scintillator composition as claimed in claim 2, wherein said solvent is an aromatic hydrocarbon, a cyclic hydrocarbon or an ether compound.

4. A solid scintillator composition as claimed in claim 3, wherein said aromatic hydrocarbon is an alkylbenzene compound or an alkoxybenzene compound.

5. A solid scintillator composition as claimed in claim 3, wherein said cyclic hydrocarbon is a phenyl-cyclohexane compound.

6. A solid scintillator composition as claimed in claim 3, wherein said ether compound is a dioxane.

7. A solid scintillator composition as claimed in claim 2, wherein said fluorescent agent is an oligo-phenylene type compound, an oxazole type compound, an oxadiazole type compound, a heterocyclic compound or a linear, polycyclic compound.

8. A solid scintillator composition as claimed in claim 2, wherein said emulsifying agent is a non-ionic surface-active agent.

9. A solid scintillator composition as claimed in claim 1, wherein said solidifying agent is a plastic resin.

10. A solid scintillator composition as claimed in claim 1, wherein said solidifying agent is a gelatin material.

11. A solid scintillator composition as claimed in claim 10 or 11, wherein said solidifying agent further contain a photographic emulsion.

12. A method for the preparation of a solid scintillator composition, characterized by solidifying an emulsified scintillator and a solidifying agent for solidifying said emulsified scintillator to thereby yield the solid scintillator composition.

13. Use of a solid scintillator composition characterized by using the solid scintillator composition comprising an emulsified scintillator and a solidifying agent for solidifying said emulsified scintillator for scintillation measurement or for autoradiography.

14. Use of a solid scintillator composition as claimed in claim 13, wherein said solid scintillator composition is employed in the form of a solid scintillator holder for scintillation measurement.

15. Use of a solid scintillator composition as claimed in claim 13, wherein said solid scintillator composition is employed in the form of solid scintillation filtering paper for scintillation measurement.

16. Use of a solid scintillator composition as claimed in claim 13, wherein said solid scintillator composition is employed in the form of a film for autoradiography.

17. Use of a solid scintillator composition as claimed in claim 13, wherein said solid scintillator composition is added to a measuring sample and used for autoradiography.

18. A method for measurement characterized by measuring a degree of radiation radiated from a radioactive substance by using a solid scintillator composition comprising an emulsified scintillator and a solidifying agent for solidifying said emulsified scintillator.

FIG. 1

FIG. 2

FIG. 3

| International application No. |
| --- |
| PCT/JP92/01519 |

**A. CLASSIFICATION OF SUBJECT MATTER**

Int. Cl$^5$  G01T1/20

According to International Patent Classification (IPC) or to both national classification and IPC

**B. FIELDS SEARCHED**

Minimum documentation searched (classification system followed by classification symbols)

Int. Cl$^5$  G01T1/20

Documentation searched other than minimum documentation to the extent that such documents are included in the fields searched

| | |
| --- | --- |
| Jitsuyo Shinan Koho | 1926 – 1992 |
| Kokai Jitsuyo Shinan Koho | 1971 – 1992 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP, B2, 56-25470 (New England Nuclear Corp.), June 12, 1981 (12. 06. 81), & US, A, 3,939,094 | 1-18 |
| A | JP, A, 57-7861 (Hitachi, Ltd.), January 16, 1982 (16. 01. 82), (Family: none) | 1-18 |
| A | JP, A, 56-132584 (Nihon Genshiryoku Jigyo K.K.), October 16, 1981 (16. 10. 81), (Family: none) | 1-18 |

☒ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| April 2, 1993 (02. 04. 93) | April 27, 1993 (27. 04. 93) |
| Name and mailing address of the ISA/  Japanese Patent Office | Authorized officer |
| Facsimile No. | Telephone No. |

Form PCT/ISA/210 (second sheet) (July 1992)